# FASCICULE DE BREVET EUROPEEN

(11) **EP 3 099 557 B1**
(45) Date de publication et mention de la délivrance du brevet: **03.01.2018**
(21) Numéro de dépôt: 15705342.2
(22) Date de dépôt: 29.01.2015
(51) Int. Cl.: B62D 15/02

(54) **DÉTERMINATION D'UNE POSITION DE RÉFÉRENCE ANGULAIRE DE DIRECTION ASSISTÉE À PARTIR DE FRONTS MONTANTS ET DESCENDANTS D'UN SIGNAL D'INDEX**
BESTIMMUNG EINER SERVOLENKWINKELREFERENZPOSITION AUS DEN STEIGENDEN UND FALLENDEN KANTEN EINES INDEXSIGNALS
DETERMINATION OF A POWER STEERING ANGULAR REFERENCE POSITION FROM THE RISING AND FALLING EDGES OF AN INDEX SIGNAL

(30) Priorité: 30.01.2014 FR 1450752
(43) Date de publication de la demande: 07.12.2016
(73) Titulaire: JTEKT Europe, 69540 Irigny (FR)
(72) Inventeur: PREGNIARD, Romaric, F-69360 St Symphorien D'ozon (FR); RAVIER, Christophe, F-69780 Saint Pierre De Chandieu (FR); PALANDRE, Xavier, F-69290 Grezieu-la-varenne (FR)
(74) Mandataire: Chevalier, Renaud Philippe
(86) Numéro de dépôt international: PCT/FR2015/050202
(87) Numéro de publication internationale: WO 2015/114256

(56) Documents cités:
- EP-A2- 1 342 647
- EP-A2- 1 754 648
- DE-A1-102005 059 883

## Description

La présente invention concerne le domaine général des directions assistées, et notamment des directions à assistance électrique, ainsi que les procédés de gestion de telles directions assistées.

Elle concerne plus particulièrement les procédés qui permettent de déterminer la position absolue d'un organe mobile de la direction, par exemple la position angulaire absolue du volant de conduite, ou bien la position absolue de la crémaillère de direction.

Cette information de position absolue du volant (ou de la crémaillère) peut en effet être nécessaire à l'accomplissement de diverses fonctions embarquées, telles que le retour automatique de la direction au point milieu, le contrôle des indicateurs de changement de direction ou de l'orientation de feux directionnels, l'assistance au stationnement, etc.

A cet effet, il est notamment connu de déduire la position angulaire absolue du volant à partir d'une part d'une position d'origine "mécanique" absolue, définie par étalonnage en usine, et d'autre part d'une mesure de la position angulaire relative de l'arbre du moteur d'assistance de direction, ladite mesure de position angulaire relative permettant de quantifier le déplacement angulaire du volant, et plus globalement le déplacement des différents organes constitutifs de la chaîne cinématique de la direction, par rapport à ladite position d'origine.

La position d'origine absolue peut avantageusement correspondre au point milieu de la direction, c'est-à-dire à la configuration dans laquelle le volant (respectivement la crémaillère) est centré, c'est-à-dire qu'il n'est orienté ni vers la gauche, ni vers la droite.

Toutefois, en cas d'interruption de l'alimentation électrique du calculateur qui stocke l'information relative à la position d'origine, par exemple lors d'un remplacement de batterie, ou bien encore suite à un décalage mécanique survenu entre le moteur d'assistance et le reste de la chaîne cinématique, par exemple lors d'un saut de la courroie d'entraînement qui relie l'arbre dudit moteur d'assistance au pignon qui engrène sur la crémaillère de direction, le référentiel basé sur ladite position d'origine absolue peut être perdu ou faussé.

C'est pourquoi on peut prévoir des moyens, intégrés à la direction assistée, qui permettent de retrouver ladite position d'origine.

A cet effet, il est notamment connu de mettre en place, au sein de la direction assistée, et plus particulièrement au niveau de la colonne de direction qui supporte le volant de conduite, un capteur de type « index ».

Un tel index est de préférence conçu pour marquer une position de référence (position d'index) unique dans un même tour complet de volant de conduite, et plus particulièrement pour générer une impulsion lorsque la colonne de direction passe par une position angulaire indexée prédéterminée, qui constitue ainsi une référence mécanique absolue.

A partir de l'information fournie par cet index, on peut, lors d'une opération d'étalonnage initial (apprentissage) en usine, mesurer l'écart qui existe entre d'une part la position angulaire de référence, qui correspond typiquement à la position angulaire qu'occupe le volant de conduite au moment du franchissement de l'index, et d'autre part la position de l'origine absolue choisie, qui correspond typiquement à la position angulaire qu'occupe ce même volant de conduite lorsque la direction se trouve en son point milieu.

Les positions angulaires peuvent être notamment mesurées au moyen de tout capteur approprié, et par exemple d'un capteur de position angulaire associé à l'arbre du moteur d'assistance.

En définitive, l'origine absolue du mécanisme de direction peut être définie comme la somme (algébrique) de la position de référence (position repérée par l'index) et d'un terme correctif de type « offset », qui correspond à l'écart susmentionné, évalué initialement par étalonnage.

Selon ce principe, on peut à tout moment, dès lors que l'information sur la position de référence (position d'index) est connue, retrouver l'origine absolue du référentiel de la direction, en ajoutant à ladite position de référence (position d'index) un terme correctif, qui correspond à l'écart angulaire (offset) mesuré initialement lors de l'opération d'étalonnage en usine.

En pratique, en croisant les informations issues d'une part de l'index, et d'autre part du capteur qui mesure la position angulaire relative de l'arbre du moteur d'assistance, et plus particulièrement en identifiant la position angulaire relative de l'arbre moteur à laquelle on détecte l'impulsion d'index, on peut avantageusement ré-étalonner le référentiel de mesure, chaque fois que cela est nécessaire, en retrouvant son origine absolue.

De la sorte, on peut de nouveau assimiler, dans ce référentiel ré-étalonné, la position angulaire relative de l'arbre moteur à la position angulaire absolue du volant.

Toutefois, un tel procédé de détermination d'origine absolue, qui se fonde sur la détection d'une position de référence au moyen d'un index, peut parfois souffrir d'une certaine imprécision.

En effet, au moment où il devient nécessaire de ré-étalonner le référentiel de mesure, les conditions de mise en oeuvre de l'index, et plus globalement de la direction, peuvent différer des conditions dans lesquelles l'étalonnage avait été effectué en usine.

Les conditions de mise en oeuvre de l'index n'étant pas strictement reproductibles, une certaine imprécision affecte la mesure même de la position de référence, et, par conséquent, la définition de l'origine absolue à partir de cette position de référence.

Cette imprécision peut notamment trouver son origine dans les dérives thermiques de l'index, les variations de température ayant en effet tendance à modifier la largeur de l'impulsion d'index. Plus particulièrement, lorsque la température du capteur augmente, la largeur d'impulsion, et notamment la largeur à mi-hauteur, tend également à augmenter, ce qui peut fausser un repérage de la position de référence si ledit repérage repose sur la détection du front montant ou du front descendant de ladite impulsion.

Une autre source d'erreur réside dans l'élasticité intrinsèque des organes mécaniques qui forment la chaîne cinématique qui relie l'arbre du moteur d'assistance à la colonne de direction équipée de l'index, ou dans les jeux qui peuvent exister au niveau des liaisons entre ces organes mécaniques.

Des déformations élastiques ou des jeux dans la chaîne cinématique peuvent en effet générer un décalage entre le repère attaché au moteur d'assistance et le repère attaché à l'index, ce qui peut nuire à la fiabilité de la corrélation (qui est présumée exacte, dans l'hypothèse d'une chaîne cinématique parfaitement rigide) entre la position angulaire relative mesurée au niveau de l'arbre moteur et la position indexée absolue détectée par l'index.

Une dilatation ou une contraction thermique des organes de direction, et notamment de la crémaillère, peuvent également contribuer à décaler l'index.

Enfin, un autre type d'erreur peut résulter des conditions dans lesquelles s'opère le passage de la colonne de direction devant la position indexée, la position apparente et la largeur de l'impulsion d'index pouvant notamment être sensibles à la vitesse instantanée de rotation du volant de conduite, ou bien encore au degré des efforts qui s'exercent sur ledit volant de conduite ou sur la crémaillère de direction. Document DE102005059883 A1 décrit le préambule de la revendication 1. Les objets assignés à l'invention visent par conséquent à aux inconvénients susmentionnés, et à proposer un nouveau type de direction assistée et un nouveau procédé qui permettent de définir rapidement, avec une précision et une fiabilité améliorées, une position de référence de direction assistée, à partir de laquelle déterminer les positions absolues des organes de ladite direction assistée.

Les objets assignés à l'invention sont atteints au moyen d'un procédé de définition d'une position de référence de direction assistée, ladite direction assistée comprenant au moins un organe de direction mobile dont la position varie selon l'orientation donnée à la direction, ledit procédé comprenant :
- une étape (a) de repérage, au cours de laquelle on génère une impulsion d'index lorsque l'organe de direction mobile passe par une position prédéterminée, dite « position indexée »,
- une étape (b) de traitement, au cours de laquelle on analyse l'impulsion d'index pour y détecter un front montant et/ou un front descendant,
- une étape (c) de caractérisation au cours de laquelle on associe au front, montant ou descendant, identifié lors de l'étape (b) de traitement une valeur dite « position de front », qui est représentative de la position que l'organe de direction mobile occupe quand ledit front se produit,
ledit procédé étant caractérisé en ce que
- les étapes (a) de repérage, (b) de traitement, et (c) de caractérisation sont répétées pour d'une part une première impulsion d'index qui est générée lorsque l'organe de direction mobile franchit la position indexée selon un premier sens de déplacement, et d'autre part une seconde impulsion d'index qui est générée lorsque ledit organe de direction mobile franchit cette même position indexée selon un second sens de déplacement, opposé au premier sens de déplacement, de telle manière que l'on acquiert respectivement d'une part une première position de front, qui correspond à un premier front généré selon le premier sens de déplacement, et d'autre part une seconde position de front, qui correspond à un second front qui est généré selon le second sens de déplacement et qui est de même nature, montante ou descendante, que le premier front,

et en ce que ledit procédé comporte une étape (d) de calcul d'une position de référence, au cours de laquelle on calcule, à partir de la première position de front et de la seconde position de front, une position de référence de la direction assistée.

Avantageusement, les inventeurs ont en effet constaté qu'en recherchant la position de référence, c'est-à-dire le centre véritable de la position indexée, à partir de deux fronts de même nature (par exemple deux fronts montants) correspondant à la même position indexée qui est « vue » d'une part dans un premier sens de passage, puis d'autre part dans un second sens de passage contraire au premier, on pouvait réduire significativement les erreurs liées à une estimation qui reposait jusqu'à présent sur un passage unique, et sur une impulsion unique.

En effet, en moyennant les deux perceptions (distinctes mais sensiblement symétriques) d'une même position indexée, telles qu'elles sont livrées par les deux impulsions qui correspondent à deux franchissements, en opposition, et plus particulièrement dans le sens horaire puis dans le sens antihoraire (ou inversement), d'une seule et même position angulaire matérielle du capteur à index, les erreurs attachées à la première impulsion sont compensées par les erreurs (sensiblement symétriques) attachées à la seconde impulsion, de sorte que, globalement, en moyenne, lesdites erreurs, ainsi que les phénomènes d'hystérésis, s'annulent mutuellement.

Le procédé permet donc de s'affranchir des sources d'erreurs mentionnées plus haut, et ainsi de définir avec une grande précision et une grande fiabilité une position de référence absolue qui correspond au véritable centre matériel de la position indexée.

En d'autres termes, le procédé conforme à l'invention rend avantageusement la mesure de la position de référence (position d'index) reproductible, en réduisant voire en éliminant les dérives et les sources d'imprécision, quel que soit le moment où intervient ladite mesure de la position de référence.

Ledit procédé permet ainsi avantageusement de définir de manière fiable et actualisable l'origine absolue du référentiel de direction, à toute période de la vie du véhicule, à partir d'une part de la position de référence (qui est mise à jour chaque fois que cela est nécessaire par une nouvelle acquisition d'impulsion d'index) et d'autre part d'un terme correctif (d'origine) déterminé initialement par étalonnage en usine comme indiqué plus haut.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue schématique, un exemple de direction assistée conforme à l'invention.
La figure 2 illustre un schéma de fonctionnement d'un procédé conforme à l'invention.
La figure 3 illustre, sur un diagramme représentant une première et une seconde impulsion d'index générées respectivement dans le sens horaire et dans le sens antihoraire, le principe de définition des positions de front, ainsi que d'une position de référence, qui correspond ici au centre commun desdites impulsions d'index.

La présente invention concerne une direction assistée 1, ainsi qu'un procédé de définition d'une position de référence θ_{réf} de direction assistée, ladite direction assistée 1 comprenant au moins un organe de direction mobile 2, dont la position varie selon l'orientation donnée à la direction.

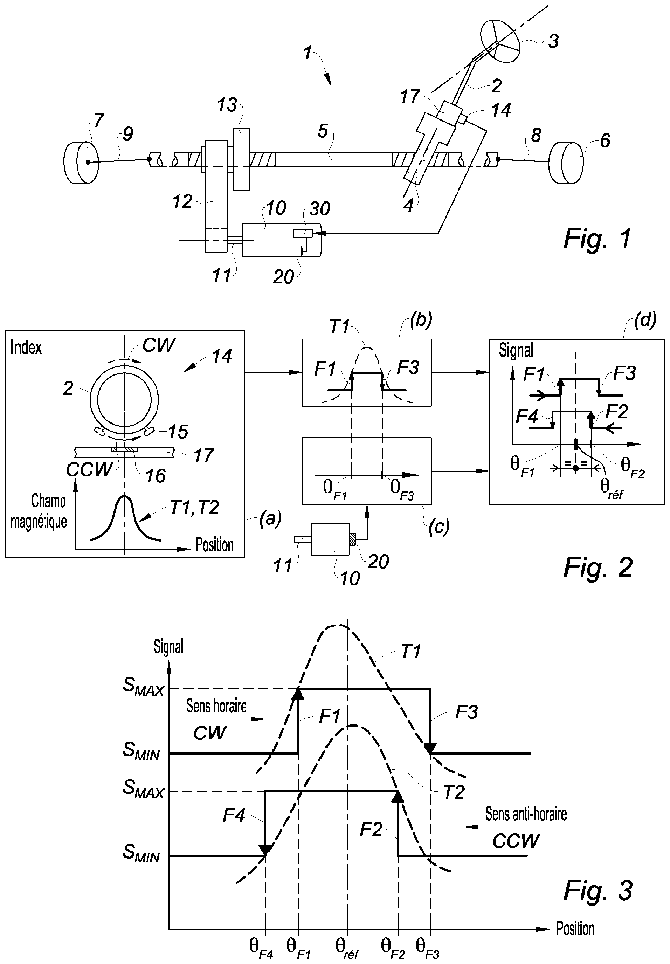

Tel que cela est illustré sur la figure 1, la direction assistée 1 selon l'invention peut avantageusement comprendre, de manière connue en soi, une colonne de direction 2, qui forme de préférence l'organe de direction mobile 2 au sens de l'invention (et qui pourra être assimilée, par commodité, audit organe mobile 2 dans ce qui suit), ladite colonne de direction 2 portant à l'une de ses extrémités un volant de conduite 3, sur lequel le conducteur peut agir pour choisir l'orientation de la direction, et à son autre extrémité un pignon 4 qui engrène de préférence sur une crémaillère 5, elle-même guidée en translation dans un carter de direction fixé sur la carrosserie du véhicule (non représenté).

De préférence, les extrémités gauche et droite de la crémaillère 5 sont reliées chacune à une roue directrice 6, 7 par une biellette de direction 8, 9, de sorte que les déplacements alternés de la crémaillère 5 commandent les changements d'orientation (en lacet) desdites roues directrices 6, 7, c'est-à-dire l'orientation de la direction.

La direction 1 comprend également un moteur d'assistance 10 à double sens de rotation dont l'arbre 11 est accouplé à un organe mobile de la direction, tel que la colonne de direction 2 ou la crémaillère 5, de manière à pouvoir appliquer audit organe mobile 2, selon des lois d'assistance prédéterminées, un effort d'assistance, moteur ou éventuellement résistant.

De façon particulièrement préférentielle, ledit moteur d'assistance 10 est un moteur électrique, et plus particulièrement un moteur à courant continu.

Toutefois, l'invention pourrait éventuellement s'appliquer à un autre type de moteur d'assistance, par exemple hydraulique.

Selon une variante possible de réalisation, illustrée sur la figure 1, le moteur d'assistance 10 pourra être accouplé à la crémaillère 5 par un mécanisme d'entraînement à courroie de transmission 12 et vis à billes 13.

Toutefois, l'invention est parfaitement applicable à toute direction pourvue d'un quelconque mécanisme d'assistance.

Ainsi, la direction 1 pourrait comporter par exemple un mécanisme d'assistance à double pignon, dans lequel un pignon moteur fixé à l'arbre 11 du moteur d'assistance 10 viendrait engrener sur une denture de la crémaillère 5, à distance du pignon 4 manoeuvré par la colonne de direction 2, ou bien encore un mécanisme d'assistance à simple pignon, dans lequel le moteur d'assistance 10 agirait directement sur la colonne de direction 2, par l'intermédiaire par exemple d'un réducteur à roue tangente et vis sans fin.

Selon l'invention, le procédé de définition d'une position de référence θ_{réf} comprend une étape (a) de repérage, au cours de laquelle on génère une impulsion d'index T1, T2 lorsque l'organe de direction mobile 2 passe par une position prédéterminée, dite « position indexée ».

Concrètement, on utilisera à cet effet un capteur à index, ci-après « index» 14, qui permet de repérer matériellement une position absolue de l'organe de direction mobile 2, dans un référentiel considéré comme fixe et par rapport auquel s'effectuent les déplacements guidés dudit organe de direction mobile 2, tel que le référentiel associé à la carrosserie du véhicule et/ou le référentiel associé au carter de direction (carter de direction qui est de préférence fixé à ladite carrosserie).

L'impulsion d'index T1, T2 formera avantageusement une impulsion de largeur non nulle (largeur qui correspondra par exemple à une rotation de 30 degrés du volant de conduite), de préférence sous forme d'un signal analogique, et par exemple d'une courbe en cloche.

Une impulsion d'index T1, T2 sera avantageusement générée automatiquement à chaque franchissement, par l'organe de direction mobile 2, du point (ou du secteur, notamment du secteur angulaire) correspondant à la position indexée.

De préférence, on pourra utiliser, tel que cela est illustré sur la figure 2, un index 14 comprenant un aimant 15, solidaire de l'organe mobile 2, destiné à coopérer avec un détecteur magnétique 16, du genre sonde à effet Hall, lui-même fixé à un carter de capteur 17 (solidaire du carter de direction) par rapport auquel s'effectue le déplacement dudit organe mobile 2.

Ainsi, le passage dudit aimant 15 devant le détecteur magnétique 16, en l'espèce au plus près dudit détecteur magnétique, génère une variation du champ magnétique qui traverse ledit détecteur 16, en l'occurrence l'apparition d'un pic de champ magnétique, qui se traduit par une impulsion d'index T1, T2.

En d'autres termes, l'impulsion d'index T1, T2 est de préférence une impulsion analogique délivrée par un capteur à index magnétique.

On pourra ainsi générer une impulsion d'index au moyen d'un index 14 de structure relativement simple, robuste, compacte, et peu coûteuse, et qui fonctionne avantageusement sans contact, et donc sans générer d'usure.

Le cas échéant, l'index 14 pourrait fonctionner selon une technologie autre que magnétique, et notamment optique. Par exemple, on pourrait prévoir sur l'organe de direction mobile 2 un trou ou un système réfléchissant qui permettrait de générer une impulsion lumineuse, dans le spectre visible ou invisible (par exemple infrarouge), en interagissant par transmission ou réflexion avec un faisceau incident émis par une source lumineuse solidaire du carter de capteur 17 (lui-même solidaire du carter de direction). Le faisceau transmis, dévié ou réfléchi serait ensuite perçu par un détecteur optique, de type photodiode ou CCD, également placé sur le carter de capteur 17.

Selon une variante de réalisation préférentielle, l'index 14 formera un capteur rotatif, repérant une position indexée qui correspond à une position angulaire dans un mouvement de rotation de l'organe de direction mobile 2, par exemple une position angulaire absolue dans un tour de manoeuvre de l'organe de direction mobile 2, et plus particulièrement dans un tour du volant de conduite 3.

Par ailleurs, l'organe de direction mobile 2 sera de préférence constitué par la colonne de direction 2 qui porte le volant de conduite 3.

On pourra alors avantageusement générer une impulsion d'index T1, T2 au passage de ladite colonne de direction 2 par une position angulaire indexée prédéterminée.

Plus particulièrement, selon un exemple de réalisation, le signal d'impulsion d'index T1, T2 pourra ainsi être généré lors du passage en rotation de la partie de la colonne de direction 2 porteuse de l'aimant 15 en vis-à-vis (au plus près) du détecteur magnétique 16 porté par le carter de capteur 17 dans lequel ladite colonne de direction 2 tourne sous l'action du volant de conduite 3 dont elle est solidaire.

On notera que, avantageusement, le placement de l'index 14 au niveau de la colonne de direction permettra une intégration simple et compacte dudit index 14.

Ceci étant, selon une autre variante possible de l'invention, l'index pourrait être formé par un capteur translatif.

Ainsi, l'invention pourrait parfaitement s'appliquer en agençant l'index 14 différemment, par exemple au niveau de la crémaillère 5, de manière à détecter le passage en translation longitudinale d'un tronçon de ladite crémaillère 5, par exemple du milieu (mi-longueur) de ladite crémaillère, porteur de l'aimant 15, par une position indexée matérialisée par un détecteur magnétique 16 intégré au carter de direction qui guide la translation de ladite crémaillère 5.

Dans tous les cas, la direction assistée et l'index 14 seront de préférence agencés pour que, par construction, la position indexée, repérée par l'index 14, soit relativement proche du point milieu de la direction.

Avantageusement, un tel choix permet en pratique de générer une impulsion d'index T1, T2 rapidement, peu après le déverrouillage de la direction et la mise en service du véhicule, du fait que des mouvements du volant de faible amplitude suffisent alors à provoquer le franchissement de la position indexée, et donc la génération d'une impulsion exploitable pour calculer une position de référence.

A titre indicatif, la position indexée, codée par l'index 14, sera ainsi de préférence située dans une plage angulaire comprise entre -3 degrés et +3 degrés (d'angle volant) par rapport au point milieu.

Le point milieu correspondra de préférence à la configuration selon laquelle la direction assistée 1 se trouve sensiblement à mi-course entre sa position de braquage complet à gauche et sa position de braquage complet à droite, le volant de conduite 3 se trouvant en position angulaire centrale, ni tourné vers la gauche, ni tourné vers la droite, et/ou, de manière équivalente, la crémaillère se trouvant en position centrale, à mi-course selon son sens de déplacement longitudinal, dans le carter de direction. Un tel point milieu correspondra alors à un « zéro volant », défini à l'échelle du mécanisme de direction lui-même.

Toutefois, on notera que, de manière alternative ou complémentaire, mais sensiblement équivalente dans son principe, on pourra définir un point milieu à l'échelle du véhicule, de type « zéro ligne droite », comme correspondant à la configuration dans laquelle les roues directrices 6, 7 présentent un angle de braquage nul, qui maintient le véhicule sur une trajectoire en ligne droite.

Par ailleurs, la direction assistée 1 étant pilotée (manuellement) au moyen d'un volant de conduite 3, on génère de préférence au plus une impulsion d'index T1, T2 par tour complet de volant de conduite 3.

Une telle disposition permettra d'identifier avec précision, et au moyen d'un index 14 de structure simple et non redondante, la position indexée, et d'associer ensuite, sans confusion possible, cette information de position indexée aux informations de position angulaire mesurées au moyen d'un autre capteur, ici de préférence associé à l'arbre 11 du moteur d'assistance 10.

Selon une variante de mise en oeuvre, on pourra générer une, et une seule, impulsion d'index par tour complet de volant de conduite 3.

Selon cette variante, qui est particulièrement bien adaptée à une technologie d'index 14 rotatif, repérant par exemple une position indexée angulaire (unique par tour) de la colonne de direction 2, l'index 14 pourra ainsi fournir un seul « top » par tour de volant, c'est-à-dire par rotation mécanique de 360 degrés du volant de conduite 3.

En complément, si la course totale du volant de conduite 3 s'étend sur plusieurs tours, et par exemple sensiblement sur trois tours, on pourra compléter l'index 14 en lui adjoignant un indicateur de tour (typiquement un compteur de tour) qui permet de distinguer dans quel tour est engagé le volant, et par exemple de déterminer s'il s'agit du tour correspondant au braquage à gauche, du tour correspondant au braquage à droite, ou bien du tour intermédiaire central.

On pourra alors, lors de l'étape (a) de repérage, prendre en considération l'impulsion d'index T1, T2 seulement si celle-ci est générée alors que le volant de conduite 3 se trouve dans son tour intermédiaire central, c'est-à-dire seulement lorsqu'il est possible d'affirmer que, mécaniquement, et par élimination, une situation de braquage prononcé est exclue, si bien que le volant se trouve nécessairement dans un tour qui lui permet de passer effectivement par le point milieu.

Selon une autre variante de mise en oeuvre, on pourra agencer l'index 14 de telle sorte qu'il ne délivre qu'une seule impulsion d'index T1, T2 sur l'ensemble de la course de l'organe mobile de direction 2 (dans un sens de parcourt monotone considéré), c'est-à-dire que l'index 14 ne repère qu'une seule position angulaire sur l'ensemble de la plage angulaire totale de rotation du volant 3 (depuis la position extrémale de braquage total à gauche jusqu'à la position extrémale opposée de braquage total à droite).

Une telle variante de mise en oeuvre est particulièrement adaptée à un capteur translatif, permettant par exemple de coder une position unique de la crémaillère 5 par rapport au carter de direction.

Elle garantit en outre matériellement l'unicité de la position indexée, ce qui exclut toute erreur liée à un déphasage (de l'équivalent d'un tour de volant) dans la détermination de la position de référence.

Le procédé conforme à l'invention comprend avantageusement, suite à l'étape (a) de repérage, une étape (b) de traitement, au cours de laquelle on analyse l'impulsion d'index T1, T2 pour y détecter un front montant F1, F2 et/ou un front descendant F3, F4, tel que cela est illustré sur la figure 2.

Le front montant F1, F2 d'une impulsion d'index T1, T2 pourra être détecté lorsque le signal analogique de ladite impulsion T1, T2, issu de l'index 14, franchit (selon une pente ascendante) un seuil haut Sₘₐₓ prédéterminé, tel que cela est illustré sur les figures 2 et 3.

De manière analogue, le front descendant d'une impulsion d'index T1, T2 pourra être détecté lorsque le signal analogique de ladite impulsion T1, T2 issu de l'index 14, franchit (selon une pente descendante) un seuil bas Sₘᵢₙ prédéterminé, inférieur au seuil haut Sₘₐₓ susmentionné.

Chaque impulsion T1, T2 pouvant ainsi être caractérisée par un front montant et un front descendant (séparés par une valeur caractéristique de la largeur d'impulsion), on pourra avantageusement convertir (traduire) chaque impulsion d'index T1, T2 en un signal logique (par exemple binaire, de type booléen) d'impulsion, tel que cela est illustré sur les figures 2 et 3.

Le procédé conforme à l'invention comprend ensuite une étape (c) de caractérisation au cours de laquelle on associe au front F1, F2, F3, F4, montant ou descendant, identifié lors de l'étape (b) de traitement, une valeur dite « position de front » θ_{F1}, θ_{F2}, θ_{F3}, θ_{F4}, qui est représentative de la position (et plus particulièrement de la position angulaire) que l'organe de direction mobile 2 occupe quand ledit front F1, F2, F3, F4 se produit.

Par convention et par commodité, quel que soit l'organe de direction mobile 2 concerné, on exprimera de préférence la position dudit organe de direction 2 sous forme d'une position angulaire équivalente, correspondant à la position angulaire que doit occuper le volant de conduite 3 pour permettre audit organe de se trouver dans la configuration considérée.

A titre indicatif, la largeur de l'une ou l'autre des impulsions d'index (largeur valant ici θ_{F3} - θ_{F1} pour la première impulsion d'index T1) pourra être comprise entre 20 degrés et 40 degrés, et par exemple sensiblement égale à 30 degrés.

La position de front θ_{F1}, θ_{F2}, θ_{F3}, θ_{F4} qui correspond à chaque front F1, F2, F3, F4 considéré sera de préférence mesurée par un second capteur 20, distinct de l'index 14, et plus préférentiellement par un capteur de position relative, typiquement un capteur inductif du genre « resolver », permettant de mesurer, à partir d'une origine quelconque librement choisie, les différents déplacements d'un organe de la direction 2 dont la position, variable dépend de, et est représentative de, l'orientation de la direction 1.

Un tel capteur de position relative permettra de déterminer les différentes positions successives de l'organe de direction 2 les unes par rapport aux autres, une position dudit organe de direction 2 étant connue relativement à une autre position précédemment occupée par ledit organe de direction 2, et ce indépendamment de toute origine fixe.

De façon particulièrement préférentielle, on utilisera comme second capteur 20 un capteur (de type « resolver ») mesurant la position angulaire relative de l'arbre 11 du moteur d'assistance 10.

En raison du couplage mécanique existant entre l'arbre 11 du moteur d'assistance et l'organe de direction mobile considéré, en l'espèce la colonne de direction 2, la position dudit arbre 11 moteur est représentative, au rapport de réduction du mécanisme d'entraînement près, de la position dudit organe mobile 2, c'est-à-dire en l'espèce de la position angulaire (relative) de la colonne de direction 2, et donc de la position angulaire (relative) du volant de conduite 3 (et plus globalement des modifications relatives de l'orientation de la direction).

Avantageusement, l'expression des positions de front θ_{F1}, θ_{F2}, θ_{F3}, θ_{F4} en référence à l'arbre 11 du moteur d'assistance 10 permet d'exploiter directement, à moindre coût, un capteur de position angulaire relative déjà disponible car intégré au moteur électrique d'assistance 10, sans avoir à recourir à l'ajout d'un capteur spécifique.

Selon l'invention, et tel que cela est illustré sur la figure 3, les étapes (a) de repérage, (b) de traitement, et (c) de caractérisation sont répétées pour d'une part une première impulsion d'index T1 qui est générée lorsque l'organe de direction mobile 2 franchit la position indexée selon un premier sens de déplacement CW (ici, par convention, le sens horaire « ClockWise », en référence préférentielle à l'acquisition de positions angulaires), et d'autre part une seconde impulsion d'index T2 qui est générée lorsque ledit organe de direction mobile 2 franchit cette même position indexée selon un second sens de déplacement CCW (ici, par convention, le sens antihoraire, « CounterClockWise », en référence préférentielle à l'acquisition de positions angulaires), opposé au premier sens de déplacement CW.

De cette manière, on acquiert respectivement d'une part une première position de front θ_{F1}, qui correspond à un premier front F1 généré selon le premier sens de déplacement CW, et d'autre part une seconde position de front θ_{F2}, qui correspond à un second front F2 qui est généré selon le second sens de déplacement CCW et qui est de même nature, montante ou descendante, que le premier front F1.

Par simple convention, on pourra considérer que le mouvement horaire CW est associé à une manoeuvre de braquage à droite, tandis que le mouvement anti-horaire CCW est associé à une manoeuvre contraire, de braquage à gauche (ou inversement).

Le procédé comprend ensuite une étape (d) de calcul d'une position de référence θ_{réf}, au cours de laquelle on calcule, à partir de la première position de front θ_{F1} et de la seconde position de front θ_{F2}, et plus particulièrement à partir d'une moyenne de la première position de front θ_{F1} et de la seconde position de front θ_{F2}, une position de référence θ_{réf} de la direction assistée 1.

En d'autres termes, le procédé selon l'invention comprend :
- une étape d'acquisition d'une première position de front (étape qui correspondant à une première exécution des étapes (a) de repérage, (b) de traitement, et (c) de caractérisation), au cours de laquelle on détecte un premier front F1 (ou respectivement F3), à savoir un front montant F1 ou (respectivement) un front descendant F3, qui appartient à une première impulsion d'index T1 générée lorsque l'organe de direction mobile 2 franchit la position indexée selon un premier sens de déplacement CW, et au cours de laquelle on acquiert une première position de front θ_{F1} (respectivement θ_{F3}) qui correspond à une valeur représentative de la position qu'occupe l'organe de direction mobile 2 lorsque survient ledit premier front F1 (respectivement F3),
- une étape d'acquisition d'une seconde position de front (étape qui correspondant à une seconde exécution des étapes (a) de repérage, (b) de traitement, et (c) de caractérisation), au cours de laquelle on détecte un second front F2 (ou respectivement F4), de même nature montante ou descendante que le premier front F1 (respectivement que F3), et qui appartient à une seconde impulsion d'index T2 générée lorsque l'organe de direction mobile 2 franchit la position indexée selon un second sens de déplacement CCW, opposé au premier sens de déplacement CW, et au cours de laquelle on acquiert une seconde position de front θ_{F2} (respectivement θ_{F4}) qui correspond à une valeur représentative de la position qu'occupe l'organe direction mobile 2 lorsque survient ledit second front F2 (respectivement F4), puis
- une étape (d) de calcul d'une position de référence, au cours de laquelle on calcule, à partir de la première position de front θ_{F1} (respectivement θ_{F3}) et de la seconde position de front θ_{F2} (respectivement θ_{F4}), et plus particulièrement à partir d'une moyenne desdites positions de front, une position de référence θ_{réf} de la direction assistée 1.

Avantageusement, le fait de regrouper (en l'espèce de sommer pour obtenir une moyenne) les informations de positions de front θ_{F1}, θ_{F2} issues de fronts de même nature (c'est-à-dire deux front montants F1, F2, ou, respectivement, deux fronts descendants F3, F4) mais acquis selon des sens de déplacement CW, CCW opposés permet d'annuler, par compensation symétrique, les erreurs et phénomènes de dérive qui peuvent affecter individuellement chacune des première et seconde impulsion T1, T2.

La position de référence θ_{réf} peut être ainsi définie très simplement, mais néanmoins très précisément.

On notera que ladite position de référence θ_{réf} est ici strictement comprise, du fait le cas échéant de l'utilisation d'une moyenne, entre la première position de front θ_{F1} et la seconde position de front θ_{F2}.

Une fois déterminée, ladite position de référence θ_{réf} va pouvoir servir pour fixer l'origine absolue, le cas échéant en ajoutant à cette position de référence une valeur corrective de type offset apprise lors de l'étalonnage en usine. Les mesures de position (via le second capteur 20, qui mesure ici des positions relatives) pourront alors être effectuées à partir de (en référence à) ladite origine absolue.

De préférence, selon une possibilité de réglage, ladite origine absolue correspondra au point milieu dit « zéro volant » de la direction 1, tel que cela a été mentionné plus haut.

Selon une autre possibilité de réglage, bien adaptée au véhicule fini, l'origine absolue pourra correspondre au « zéro ligne droite », c'est-à-dire à la configuration dans laquelle les roues 6, 7 directrices ont un angle de braquage nul, de sorte à permettre un déplacement du véhicule en ligne droite (configuration qui ne coïncide pas nécessairement de manière exacte avec le « zéro volant »).

Avantageusement, et quelle que soit la définition choisie pour le réglage de l'origine absolue, dès lors que les mesures de positions relatives (ici de l'arbre 11 du moteur d'assistance 10) sont effectuées (systématiquement) en référence à cette origine absolue, elles deviendront en pratique des mesures de positions absolues, en l'espèce de la position angulaire absolue de la colonne de direction 2, de la position angulaire absolue du volant de conduite 3, et plus globalement de l'orientation absolue de la direction (par rapport à son point milieu).

On notera par ailleurs que, pour permettre l'exécution du procédé selon l'invention, il est nécessaire de mémoriser les fronts F1, F2, F3, F4 ainsi que les positions de front θ_{F1}, θ_{F2}, θ_{F3}, θ_{F4} correspondantes, et de classer lesdits fronts (associés à leurs positions de front respectives) selon la nature (montante ou descendante) desdits fronts, et selon le sens de déplacement (sens de rotation) dans lequel lesdits fronts ont été acquis, et ce jusqu'à obtenir suffisamment de fronts pour réaliser le calcul prévu à l'étape (d).

De façon particulièrement préférentielle, par souci de simplicité, de rapidité, et de correction symétrique des erreurs, on optera pour le calcul d'une moyenne arithmétique des positions de front (chaque position de front étant pondérée de manière identique à l'autre).

De préférence, la position de référence θ_{réf} pourra en particulier être définie à partir d'une moyenne de la première position de front θ_{F1} et de la seconde position de front θ_{F2}.

On pourra définir ainsi une position de référence de manière simple et rapide avec seulement deux positions de fronts correspondant à (seulement) une paire de fronts F1, F2 de même nature.

Encore plus préférentiellement, la position de référence θ_{réf} pourra être définie comme (exactement) égale à la moyenne arithmétique des première et seconde positions de front : θ_{ref} = 1/2 * (θ_{F1} + θ_{F2})

Ceci permettra notamment de définir la position de référence θ_{réf} comme le centre moyen des deux impulsions d'index T1, T2 considérées.

Cela permettra notamment au procédé de converger rapidement, c'est-à-dire d'identifier rapidement une position de référence fiable, sitôt que les manoeuvres alternées du volant de conduite 3 par le conducteur auront permis d'acquérir deux impulsions d'index T1, T2 opposées.

Selon une autre variante préférentielle de mise en oeuvre du procédé, on acquiert une troisième position de front θ_{F3}, qui correspond à une valeur représentative de la position occupée par l'organe de direction mobile 2 lorsque survient un troisième front F3 (un front descendant sur les figures) qui appartient à la première impulsion d'index T1 et qui est de nature opposée à celle du premier front F1, ainsi qu'une quatrième position de front θ_{F4}, qui correspond à une valeur représentative de la position occupée par l'organe de direction mobile 2 lorsque survient un quatrième front F4 qui appartient à la seconde impulsion T2 et qui est de nature opposée à celle du second front F2, et de même nature (ici descendante) que le troisième front F3.

Lors de l'étape (d) de calcul, on pourra alors définir la position de référence θ_{réf} à partir d'une moyenne des première, seconde, troisième et quatrième positions de front θ_{F1}, θ_{F2}, θ_{F3}, θ_{F4}, et de préférence définir ladite position de référence θ_{réf} comme égale à la moyenne arithmétique des première, seconde, troisième et quatrième positions de front : θ_{réf} = 1/4 * (θ_{F1} + θ_{F2} + θ_{F3} + θ_{F4})

Un tel mode d'obtention sera avantageusement plus précis que le précédent utilisant seulement deux fronts F1, F2, même s'il peut nécessiter éventuellement une phase d'acquisition des signaux analogiques d'impulsion d'index T1, T2 un peu plus longue.

Ceci étant, on notera que, ici encore, l'acquisition de deux impulsions T1, T2 opposées, correspondant à deux « coups de volant 3 » alternés au voisinage de la position indexée (elle-même préférentiellement proche du point milieu de la direction), est suffisante pour obtenir une convergence vers la position de référence.

Comme indiqué plus haut, la direction assistée 1 comprenant un moteur d'assistance 10, les positions de front θ_{F1}, θ_{F2}, θ_{F3}, θ_{F4} sont de préférence définies par les positions angulaires de l'arbre 11 du moteur d'assistance 10, telles que ces positions angulaires sont mesurées lorsque surviennent (respectivement) les fronts F1, F2, F3, F4 considérés.

En d'autres termes, lors étape (c) caractérisation, on mesure la position angulaire (relative) de l'arbre moteur 11 au moment où le front considéré F1, F2, F3, F4 se produit, et l'on considère cette valeur de position angulaire relative comme la position de front (toutes les positions de front étant ainsi exprimées dans le même référentiel du moteur d'assistance 10).

De préférence, lesdites positions angulaires sont mesurées au moyen d'un capteur de position relative 20, tel qu'un « resolver ».

Bien entendu, l'invention peut porter sur tout procédé exploitant le procédé de détermination de position de référence susmentionné, et notamment sur un procédé de détermination de la position angulaire absolue d'un volant de conduite 3 équipant une direction assistée 1 pourvue d'un moteur d'assistance 10, ledit procédé comprenant une phase de prise d'origine, au cours de laquelle on détermine une position de référence θ_{réf} selon un procédé conforme à l'invention, et l'on fixe, à partir de cette position de référence, et de préférence au moyen d'un terme correctif obtenu par étalonnage en usine tel que cela a été décrit plus haut, l'origine d'un référentiel angulaire dans lequel s'effectuent les manoeuvres du volant de conduite, ledit procédé comprenant ensuite une phase de mesure de position au cours de laquelle on mesure, dans ledit référentiel angulaire, la position relative de l'arbre 11 du moteur d'assistance 10 (ou bien la position de tout autre organe de direction mobile appartenant à la chaîne cinématique manoeuvrée par le volant de conduite 3, et dont la position est de ce fait représentative de la position dudit volant 3) au moyen d'un capteur de position relative 20, de préférence de type « resolver », pour exprimer la position absolue du volant de conduite.

L'invention concerne également un support de données lisible sur un calculateur et contenant des éléments de code de programme informatique permettant la mise en oeuvre d'un procédé selon l'une quelconque des variantes de l'invention lorsque ledit support est lu par un calculateur.

L'invention concerne également en tant que telle une direction assistée 1 qui comprend au moins un support de référence, du genre carter, ainsi qu'au moins un moteur d'assistance 10 et au moins un organe de direction, du genre colonne de direction 2, qui est bidirectionnel, c'est-à-dire monté mobile par rapport au support de sorte à pouvoir se déplacer alternativement dans un premier sens de déplacement CW et dans un second sens de déplacement opposé CCW, et qui est couplé à l'arbre 11 du moteur d'assistance 10 de sorte à pouvoir effectuer les manoeuvres de la direction, ladite direction assistée comprenant également un index 14 qui génère une impulsion d'index T1, T2 à chaque passage de l'organe de direction 2 par une position indexée prédéterminée, ainsi qu'un capteur de position relative 20 permettant de mesurer la position angulaire de l'arbre 11 du moteur d'assistance 10.

Selon l'invention, ladite direction assistée comprend une unité d'analyse 30 (typiquement un calculateur électronique qui peut être intégré au moteur d'assistance 10) qui est structurée ou programmée pour détecter les fronts montants F1, F2 et/ou descendants F3, F4 des impulsions d'index T1, T2, mémoriser les positions angulaires, dites « positions de front » θ_{F1}, θ_{F2}, θ_{F3}, θ_{F4}, de l'arbre 11 du moteur d'assistance qui correspondent auxdits fronts, classer les fronts F1, F2, F3, F4 par nature, selon que lesdits fronts sont descendants ou montants, classer lesdits fronts en fonction du sens de déplacement, horaire CW ou antihoraire CCW, selon lequel a été générée l'impulsion d'index T1, T2 à laquelle appartient chaque front considéré, puis calculer une position de référence θ_{réf} à partir de deux positions de front, et plus particulièrement à partir d'une moyenne de deux positions de front, associées à deux fronts F1, F2 (respectivement F3, F4) de même nature issus chacun respectivement d'une première impulsion d'index T1 et d'une second impulsion d'index T2 qui correspondent à des sens de déplacement CW, CCW opposés de l'organe de direction 2.

L'invention porte également sur une unité d'analyse 30 en tant que telle, et plus globalement sur un module de direction assistée (sous-ensemble de direction assistée), tel qu'un ensemble moteur d'assistance/contrôleur, qui est destiné à être intégré dans une direction assistée, et qui contient une telle unité d'analyse 30 embarquée.

L'invention porte bien entendu enfin sur un véhicule, et notamment un véhicule automobile, équipé d'une direction assistée 1 selon l'invention, qui peut avantageusement contrôler l'orientation des roues directrices 6, 7 (et le cas échéant motrices) dudit véhicule.

Bien entendu, l'invention n'est nullement limitée aux seules variantes de réalisation décrites, l'homme du métier étant notamment à même d'isoler ou de combiner librement entre elles l'une ou l'autre des caractéristiques mentionnées dans ce qui précède, ou de leur substituer des équivalents.

Ainsi, on notera que, de manière globale, l'utilisation, afin de calculer une position de référence de direction assistée, de la détection de deux fronts d'impulsion d'index distincts, de même nature (montante ou descendante) mais correspondant à des impulsions générées par le franchissement, dans un premier sens CW puis dans un second sens opposé CCW, d'une même position indexée, peut constituer une invention à part entière, quelle que soit par ailleurs les informations (notamment de position) tirées desdits fronts, et quelle que soit la nature du traitement appliqué à ces informations (et en particulier quelle que soit la nature de l'étape de calcul (d), dès lors que l'étape (d) de calcul permet de déterminer la position de référence à partir des informations de fronts, notamment à partir des positions respectives de chacun des fronts).

## Revendications

1. Procédé de définition d'une position de référence (θ_{réf}) de direction assistée (1), ladite direction assistée (1) comprenant au moins un organe de direction mobile (2) dont la position varie selon l'orientation donnée à la direction, ledit procédé comprenant :
- une étape (a) de repérage, au cours de laquelle on génère une impulsion d'index (T1, T2) lorsque l'organe de direction mobile (2) passe par une position prédéterminée, dite « position indexée »,
- une étape (b) de traitement, au cours de laquelle on analyse l'impulsion d'index (T1) pour y détecter un front montant (F1, F2) et/ou un front descendant (F3, F4),
- une étape (c) de caractérisation au cours de laquelle on associe au front (F1, F2, F3, F4), montant ou descendant, identifié lors de l'étape (b) de traitement, une valeur dite « position de front » (θ_{F1}, θ_{F2}, θ_{F3}, θ_{F4}), qui est représentative de la position que l'organe de direction mobile (2) occupe quand ledit front (F1, F2, F3, F4) se produit,
ledit procédé étant **caractérisé en ce que**
- les étapes (a) de repérage, (b) de traitement, et (c) de caractérisation sont répétées pour d'une part une première impulsion d'index (T1) qui est générée lorsque l'organe de direction mobile (2) franchit la position indexée selon un premier sens de déplacement (CW), et d'autre part une seconde impulsion d'index (T2) qui est générée lorsque ledit organe de direction mobile (2) franchit cette même position indexée selon un second sens de déplacement (CCW), opposé au premier sens de déplacement (CW), de telle manière que l'on acquiert respectivement d'une part une première position de front (θ_{F1}), qui correspond à un premier front (F1) généré selon le premier sens de déplacement (CW), et d'autre part une seconde position de front (θ_{F2}), qui correspond à un second front (F2) qui est généré selon le second sens de déplacement (CCW) et qui est de même nature, montante ou descendante, que le premier front (F1),
et **en ce que** ledit procédé comporte une étape (d) de calcul d'une position de référence (θ_{réf}), au cours de laquelle on calcule, à partir de la première position de front (θ_{F1}) et de la seconde position de front (θ_{F2}), une position de référence (θ_{réf}) de la direction assistée.

2. Procédé selon la revendication 1 **caractérisé en ce que** la position de référence (θ_{réf}) est définie à partir d'une moyenne de la première position de front (θ_{F1}) et de la seconde position de front (θ_{F2}), et de préférence définie comme égale à la moyenne arithmétique des première et seconde positions de front (θ_{F1}, θ_{F2}).

3. Procédé selon la revendication 1 ou 2 **caractérisé en ce que** l'on acquiert une troisième position de front (θ_{F3}), qui correspond à une valeur représentative de la position occupée par l'organe de direction mobile (2) lorsque survient un troisième front (F3) qui appartient à la première impulsion d'index (T1) et qui est de nature opposée à celle du premier front (F1), ainsi qu'une quatrième position de front (θ_{F4}), qui correspond à une valeur représentative de la position occupée par l'organe de direction mobile (2) lorsque survient un quatrième front (F4) qui appartient à la seconde impulsion (T2) et qui est de nature opposée à celle du second front (F2), et de même nature que le troisième front (F3), et **en ce que**, lors de l'étape (d) de calcul, on définit la position de référence à partir d'une moyenne, et de préférence comme égale à la moyenne arithmétique, des première, seconde, troisième et quatrième positions de front (θ_{F1}, θ_{F2}, θ_{F3}, θ_{F4}).

4. Procédé selon l'une des revendications précédentes **caractérisé en ce que**, la direction assistée comprenant un moteur d'assistance (10), les positions de front (θ_{F1}, θ_{F2}, θ_{F3}, θ_{F4}) sont définies par les positions angulaires de l'arbre (11) du moteur d'assistance (10), telles que ces positions angulaires sont mesurées, de préférence au moyen d'un capteur de position relative (20), lorsque surviennent les fronts (F1, F2, F3, F4) considérés.

5. Procédé selon l'une des revendications précédentes **caractérisé en ce que** l'organe de direction mobile (2) est constitué par la colonne de direction (2) qui porte le volant de conduite (3), et **en ce que** l'on génère une impulsion d'index (T1, T2) au passage de ladite colonne de direction (2) par une position angulaire indexée prédéterminée.

6. Procédé selon l'une des revendications précédentes **caractérisé en ce que**, la direction assistée (1) étant pilotée au moyen d'un volant de conduite (3), on génère au plus une impulsion d'index (T1, T2) par tour complet de volant de conduite (3).

7. Procédé selon l'une des revendications précédentes **caractérisé en ce que** l'impulsion d'index (T1, T2) est une impulsion analogique, de préférence délivrée par un capteur à index magnétique (14).

8. Procédé de détermination de la position angulaire absolue d'un volant de conduite (3) équipant une direction assistée (1) pourvue d'un moteur d'assistance (10), ledit procédé comprenant une phase de prise d'origine, au cours de laquelle on détermine une position de référence (θ_{réf}) selon un procédé conforme à l'une ou l'autre des revendications 1 à 7, et l'on fixe, à partir de cette position de référence (θ_{réf}), l'origine d'un référentiel angulaire dans lequel s'effectuent les manoeuvres du volant de conduite, ledit procédé comprenant ensuite une phase de mesure de position au cours de laquelle on mesure, dans ledit référentiel angulaire, la position relative de l'arbre (11) du moteur d'assistance (10) au moyen d'un capteur de position relative (20), de type « resolver », pour exprimer la position absolue du volant de conduite (3).

9. Support de données lisible sur un calculateur et contenant des éléments de code de programme informatique permettant la mise en oeuvre d'un procédé selon l'une quelconque des revendications 1 à 7 lorsque ledit support est lu par un calculateur.

10. Direction assistée (1) comprenant au moins un support de référence, du genre carter, ainsi qu'au moins un moteur d'assistance (10) et au moins un organe de direction (2), du genre colonne de direction, qui est monté mobile par rapport au support de sorte à pouvoir se déplacer alternativement dans un premier sens de déplacement (CW) et dans un second sens de déplacement (CCW) opposé, et qui est couplé à l'arbre (11) du moteur d'assistance de sorte à pouvoir effectuer les manoeuvres de la direction, ladite direction assistée comprenant également un index (14) qui génère une impulsion d'index (T1, T2) à chaque passage de l'organe de direction (2) par une position indexée prédéterminée, ainsi qu'un capteur de position relative (20) permettant de mesurer la position angulaire de l'arbre (11) du moteur d'assistance, ladite direction assistée étant **caractérisée en ce qu'**elle comprend une unité d'analyse (30) structurée ou programmée pour détecter les fronts montants (F1, F2) et/ou descendants (F3, F4) des impulsions d'index (T1, T2), mémoriser les positions angulaires, dites « positions de front » (θ_{F1}, θ_{F2}, θ_{F3}, θ_{F4}), de l'arbre (11) du moteur d'assistance qui correspondent auxdits fronts, classer les fronts (F1, F2, F3, F4) par nature, selon que lesdits fronts sont descendants ou montants, classer lesdits fronts en fonction du sens de déplacement, horaire (CW) ou antihoraire (CCW), selon lequel a été générée l'impulsion d'index à laquelle appartient chaque front considéré, puis calculer une position de référence (θ_{réf}) à partir de deux positions de front associées à deux fronts de même nature issus chacun respectivement d'une première impulsion d'index et d'une second impulsion d'index qui correspondent à des sens de déplacement opposés de l'organe de direction (2).

## Patentansprüche

1. Verfahren zur Definition einer Referenzposition (θ_{réf}) einer Servolenkung (1), wobei die Servolenkung (1) mindestens ein bewegliches Lenkungsorgan (2) umfasst, dessen Position gemäß der Ausrichtung variiert, die der Lenkung gegeben wird, wobei das Verfahren Folgendes umfasst:
- einen Schritt (a) des Kennzeichnens, im Laufe dessen ein Indeximpuls (T1, T2) erzeugt wird, wenn das bewegliche Lenkungsorgan (2) durch eine vorbestimmte Position, bezeichnet als "indexierte Position", verläuft,
- einen Schritt (b) des Behandelns, im Laufe dessen der Indeximpuls (T1) analysiert wird, um dort eine ansteigende Flanke (F1, F2) und/oder eine absteigende Flanke (F3, F4) nachzuweisen,
- einen Schritt (c) des Charakterisierens, im Laufe dessen mit der Flanke (F1, F2, F3, F4), ansteigend oder absteigend, die beim Schritt (b) des Behandelns identifiziert wurde, ein Wert assoziiert wird, bezeichnet als "Flankenposition" (θ_{F1}, θ_{F2}, θ_{F3}, θ_{F4}), der repräsentativ für die Position ist, die das bewegliche Lenkungsorgan (2) einnimmt, wenn die Flanke (F1, F2, F3, F4) erzeugt wird,
wobei das Verfahren **dadurch gekennzeichnet ist, dass**
- die Schritte (a) des Kennzeichnens, (b) des Behandelns und (c) des Charakterisierens wiederholt werden einerseits für einen ersten Indeximpuls (T1), der erzeugt wird, wenn das bewegliche Lenkungsorgan (2) die indexierte Position gemäß einer ersten Verschiebungsrichtung (CW) überschreitet, und andererseits einen zweiten Indeximpuls (T2), der erzeugt wird, wenn das bewegliche Lenkungsorgan (2) diese gleiche indexierte Position gemäß einer zweiten Verschiebungsrichtung (CCW), die der ersten Verschiebungsrichtung (CW) gegenüber liegt, überschreitet, so dass jeweils einerseits eine erste Flankenposition (θ_{F1}) eingenommen wird, die einer ersten Flanke (F1) entspricht, die gemäß der ersten Verschiebungsrichtung (CW) generiert wird, und andererseits eine zweite Flankenposition (θ_{F2}), die einer zweiten Flanke (F2) entspricht, die gemäß der zweiten Verschiebungsrichtung (CCW) generiert wird, und die der gleichen Art, ansteigend oder absteigend, wie die erste Flanke (F1) ist,
und dadurch, dass das Verfahren einen Schritt (d) des Berechnens einer Referenzposition (θ_{réf}) umfasst, im Laufe dessen auf der Grundlage der ersten Flankenposition (θ_{F1}) und der zweiten Flankenposition (θ_{F2}) eine Referenzposition (θ_{réf}) der Servolenkung berechnet wird.

2. Verfahren nach Anspruch 1, **dadurch gekennzeichnet, dass** die Referenzposition (θ_{réf}) auf der Grundlage eines Mittelwerts der ersten Flankenposition (θ_{F1}) und der zweiten Flankenposition (θ_{F2}) definiert ist, und vorzugsweise definiert als gleich dem arithmetischen Mittelwert der ersten und zweiten Flankenposition (θ_{F1}, θ_{F2}).

3. Verfahren nach Anspruch 1 oder 2, **dadurch gekennzeichnet, dass** eine dritte Flankenposition (θ_{F3}) eingenommen wird, die einem repräsentativen Wert der Position entspricht, die vom beweglichen Lenkungsorgan (2) eingenommen wird, wenn eine dritte Flanke (F3) auftritt, die zum ersten Indeximpuls (T1) gehört, und die entgegengesetzter Art wie diejenige der ersten Flanke (F1) ist, ebenso wie eine vierte Flankenposition (θ_{F4}), die einem repräsentativen Wert der Position entspricht, die vom bewegliche Lenkungsorgan (2) eingenommen wird, wenn eine vierte Flanke (F4) auftritt, die zum zweiten Impuls (T2) gehört, und die entgegengesetzter Art wie diejenige der zweiten Flanke (F2) ist, und gleicher Art wie die dritte Flanke (F3), und dadurch, dass, beim Schritt (d) des Berechnens, die Referenzposition auf der Grundlage eines Mittelwerts definiert wird, und vorzugsweise als gleich dem arithmetischen Mittelwert der ersten, zweiten, dritten und vierten Flankenposition (θ_{F1}, θ_{F2}, θ_{F3}, θ_{F4}).

4. Verfahren nach einem der vorhergehenden Ansprüche, **dadurch gekennzeichnet, dass** die Servolenkung einen Servomotor (10) umfasst, die Flankenpositionen (θ_{F1}, θ_{F2}, θ_{F3}, θ_{F4}) durch die Winkelpositionen der Welle (11) des Servomotors (10) definiert werden, so dass diese Winkelpositionen vorzugsweise mit Hilfe eines Sensors der relativen Position (20) gemessen werden, wenn die in Betracht gezogenen Flanken (F1, F2, F3, F4) auftreten.

5. Verfahren nach einem der vorhergehenden Ansprüche, **dadurch gekennzeichnet, dass** das bewegliche Lenkungsorgan (2) aus der Lenksäule (2) besteht, die das Lenksteuer (3) trägt, und dadurch, dass ein Indeximpuls (T1, T2) beim Durchgang der Lenksäule (2) durch eine vorbestimmte indexierte Winkelposition generiert wird.

6. Verfahren nach einem der vorhergehenden Ansprüche, **dadurch gekennzeichnet, dass** die Servolenkung (1) mit Hilfe eines Lenksteuers (3) gelenkt wird, außerdem ein Indeximpuls (T1, T2) pro kompletter Drehung des Lenksteuers (3) generiert wird.

7. Verfahren nach einem der vorhergehenden Ansprüche, **dadurch gekennzeichnet, dass** der Indeximpuls (T1, T2) ein analoger Impuls ist, vorzugsweise abgegeben durch einen Sensor mit magnetischem Index (14).

8. Verfahren zur Bestimmung der absoluten Winkelposition eines Lenksteuers, (3) das eine Servolenkung (1) ausstattet, die mit einem Servomotor (10) versehen ist, wobei das Verfahren eine Phase der Referenzierung umfasst, im Laufe deren eine Referenzposition (θ_{réf}) gemäß einem Verfahren bestimmt wird, das mit dem einen oder dem anderen der Ansprüche 1 bis 7 konform ist, und, auf der Grundlage dieser Referenzposition (θ_{réf}), der Ursprung eines Winkelreferenzsystems fixiert wird, in dem die Manöver des Fahrsteuers durchgeführt werden, wobei das Verfahren dann eine Phase des Messens der Position umfasst, in deren Verlauf im Winkelreferenzsystem die relative Position der Welle (11) des Servomotors (10) mit Hilfe eines Sensors der relativen Position (20) vom Typ "Resolver" gemessen wird, um die absolute Position des Lenkrades (3) auszudrücken.

9. Datenträger, der auf einem Rechner gelesen werden kann und Informatik-Programmcodeelemente umfasst, die die Durchführung eines Verfahrens nach einem der Ansprüche 1 bis 7 ermöglichen, wenn der Träger von einem Rechner gelesen wird.

10. Servolenkung (1), umfassend mindestens einen Referenzträger vom Typ Gehäuse, sowie mindestens einen Servomotor (10) und mindestens ein Lenkungsorgan (2) der Art Lenksäule, die beweglich mit Bezug auf den Träger montiert ist, um sich alternativ in einer ersten Verschiebungsrichtung (CW) verschieben und in einer zweiten, gegenüber liegenden, Verschiebungsrichtung (CCW) verschieben zu können, und die mit der Welle (11) des Servomotors gekoppelt ist, um die Manöver der Lenkung durchführen zu können, wobei die Servolenkung ebenfalls einen Index (14) umfasst, der einen Indeximpuls (T1, T2) bei jedem Durchgang des Lenkungsorgans (2) durch eine vorbestimmte indexierte Position generiert, sowie einen Sensor der relativen Position (20), der ermöglicht, die Winkelposition der Welle (11) des Servomotors zu messen, wobei die Servolenkung **dadurch gekennzeichnet ist, dass** sie eine Analyseeinheit (30) umfasst, die strukturiert oder programmiert ist, um ansteigende (F1, F2) und/oder absteigende (F3, F4) Flanken der Indeximpulse (T1, T2) nachzuweisen, die Winkelpositionen, bezeichnet als "Flankenpositionen" (θ_{F1}, θ_{F2}, θ_{F3}, θ_{F4}), der Welle (11) des Servomotors zu speichern, die den Flanken entsprechen, die Flanken (F1, F2, F3, F4) nach Art zu klassifizieren, danach, ob die Flanken abfallend oder ansteigend sind, die Flanken je nach der Verschiebungsrichtung, im Uhrzeigersinn (CW) oder entgegen dem Uhrzeigersinn (CCW), zu klassifizieren, nach dem der Indeximpuls generiert wurde, zu dem jeder in Betracht gezogene Index gehört, dann eine Referenzposition (θ_{réf}) auf der Grundlage von zwei Flankenpositionen zu berechnen, die mit zwei Flanken der gleichen Art assoziiert sind, die jeweils von einem ersten Indeximpuls bzw. einem zweiten Indeximpuls stammen, die gegenüber liegenden Verschiebungsrichtungen des Steuerungsorgans (2) entsprechen.

## Claims

1. A method for defining a reference position (θ_{ref}) of power steering (1), said power steering (1) comprising at least one movable steering member (2) whose position varies according to the orientation given to the steering, said method comprising:
- a tracking step (a), during which an index pulse (T1, T2) is generated when the movable steering member (2) passes through a predetermined position, called « indexed position »,
- a processing step (b), during which the index pulse (T1) is analyzed to detect a leading edge (F1, F2) and/or a trailing edge (F3, F4) therein,
- a characterization step (c) during which, a value called « edge position » value (θ_{F1}, θ_{F2}, θ_{F3}, θ_{F4}), which is representative of the position that the movable steering member (2) occupies when said edge (F1, F2, F3, F4) takes place, is associated to the leading or trailing edge (F1, F2, F3, F4), identified during the processing step (b),
said method being **characterized in that**
- the tracking (a), processing (b) and characterization (c) steps are repeated, on the one hand, for a first index pulse (T1) which is generated when the movable steering member (2) crosses the indexed position along a first displacement direction (CW), and, on the other hand, a second index pulse (T2) which is generated when said movable steering member (2) crosses this same indexed position along a second displacement direction (CCW), opposite to the first displacement direction (CW), so as to acquire respectively, on the one hand, a first edge position (θ_{F1}), which corresponds to a first edge (F1) generated in the first displacement direction (CW), and on the other hand a second edge position (θ_{F2}), which corresponds to a second edge (F2) which is generated along the second displacement direction (CCW) and which is of the same nature, leading or trailing, as the first edge (F1),
and **in that** said method includes a step (d) of calculating a reference position (θ_{ref}), during which, from the first edge position (θ_{F1}) and the second edge position (θ_{F2}), a reference position (θ_{ref}) of the power steering is calculated.

2. The method according to claim 1, **characterized in that** the reference position (θ_{ref}) is defined from an average of the first edge position (θ_{F1}) and the second edge position (θ_{F2}), and preferably defined as equal to the arithmetic average of the first and second edge positions (θ_{F2}, θ_{F2}).

3. The method according to claim 1 or 2, **characterized in that** it acquires a third edge position (θ_{F3}), which corresponds to a value representative of the position occupied by the movable steering member (2) when a third edge (F3) takes place, which belongs to the first index pulse (T1) and which is opposite in nature to that of the first edge (F1), as well as a fourth edge position (θ_{F4}), which corresponds to a value representative of the position occupied by the movable steering member (2) when a fourth edge (F4) takes place, which belongs to the second pulse (T2) and which is opposite in nature to that of the second edge (F2), and of the same nature as the third edge (F3), and **in that**, during the calculation step (d), the reference position is defined from an average, and preferably as being equal to the arithmetic average, of the first, second, third and fourth edge positions (θ_{F1}, θ_{F2}, θ_{F3}, θ_{F4}).

4. The method according to any of the preceding claims **characterized in that**, the power steering comprising an assist motor (10), the edge positions (θ_{F1}, θ_{F2}, θ_{F3}, θ_{F4}) are defined by the angular positions of the shaft (11) of the assist motor (10), such that these angular positions are measured, preferably by means of a relative position sensor (20), when the considered edges (F1, F2, F3, F4) take place.

5. The method according to any of the preceding claims **characterized in that** the movable steering member (2) is constituted by the steering column (2) which carries the steering wheel (3), and **in that** an index pulse (T1, T2) is generated upon the passage of said steering column (2) by a predetermined indexed angular position.

6. The method according to any of the preceding claims **characterized in that**, the power steering (1) being driven by means of a steering wheel (3), at most one index pulse (T1, T2) is generated per full revolution of the steering wheel (3).

7. The method according to any of the preceding claims **characterized in that** the index pulse (T1, T2) is an analog pulse, preferably delivered by a magnetic index sensor (14).

8. A method for determining the absolute angular position of a steering wheel (3) equipping a power steering (1) provided with an assist motor (10), said method comprising an origin intake phase, during which a reference position (θ_{ref}) is determined according to a method in accordance with any of claims 1 to 7, and, the origin of an angular frame of reference in which the maneuvers of the steering wheel are performed is set from this reference position (θ_{ref}), said method then comprising a position measuring phase during which, in said angular frame of reference, the relative position of the shaft (11) of the assist motor (10) is measured by means of a relative position sensor (20), of the « resolver » type, in order to express the absolute position of the steering wheel (3).

9. A data support readable on a calculator and containing computer program code elements allowing the implementation of a method according to any one of claims 1 to 7 when said support is read by a calculator.

10. The power steering (1) comprising at least one reference support, of the casing kind, as well as at least one assist motor (10) and at least one steering member (2), of the steering column kind, which is movably mounted relative to the support so as to be capable of being displaced in reciprocation along a first displacement direction (CW) and along a second opposite displacement direction (CCW), and which is coupled to the shaft (11) of the assist motor so as to be capable of performing the maneuvers of the steering, said power steering also comprising an index (14) which generates an index pulse (T1, T2) at each passage of the steering member (2) by a predetermined indexed position, as well as a relative position sensor (20) allowing measuring the angular position of the shaft (11) of the assist motor, said power steering being **characterized in that** it comprises a structured or programmed analysis unit (30) in order to detect the leading (F1, F2) and/or trailing (F3, F4) edges of the index pulses (T1, T2), to store the angular positions, called « edge positions » (θ_{F1}, θ_{F2}, θ_{F3}, θ_{F4}), of the shaft (11) of the assist motor which correspond to said edges, to classify the edges (F1, F2, F3, F4) by nature, according to whether said edges are trailing or leading, classify said edges depending on the displacement direction clockwise (CW) or counterclockwise (CCW), according to which the index pulse, to which each considered edge belongs, have been generated, then calculate a reference position (θ_{ref}) from two edge positions associated to two edges of the same nature each from respectively a first index pulse and a second index pulse which correspond to opposite displacement directions of the steering member (2).
